# EUROPEAN PATENT SPECIFICATION

(11) **EP 3 730 014 B1**
(45) Date of publication and mention of the grant of the patent: **01.05.2024**
(21) Application number: 18908959.2
(22) Date of filing: 07.08.2018
(51) Int. Cl.: A47J 43/04, H02P 27/08, H02P 23/00, A47J 43/046, A47J 43/08

(54) **FOOD PROCESSING MACHINE**
KÜCHENMASCHINE
ROBOT DE CUISINE

(30) Priority: 07.03.2018 CN 201810186164; 07.03.2018 CN 201810186163; 07.03.2018 CN 201820316116 U; 07.03.2018 CN 201810186155; 07.03.2018 CN 201810187835
(43) Date of publication of application: 28.10.2020
(73) Proprietor: Guangdong Midea Consumer Electrics Manufacturing Co., Ltd., Foshan City, Guangdong 528311 (CN)
(72) Inventor: XU, Shaocheng, Foshan, Guangdong 528311 (CN); WANG, Zhifeng, Foshan, Guangdong 528311 (CN); FENG, Jiangping, Foshan, Guangdong 528311 (CN); LIANG, Xiantang, Foshan, Guangdong 528311 (CN); LEI, Jun, Foshan, Guangdong 528311 (CN); WANG, Shuai, Foshan, Guangdong 528311 (CN); LIU, Chuanlan, Foshan, Guangdong 528311 (CN)
(74) Representative: Grünecker Patent- und Rechtsanwälte PartG mbB
(86) International application number: PCT/CN2018/099233
(87) International publication number: WO 2019/169831

(56) References cited:
- EP-A1- 2 366 603
- CN-A- 102 345 621
- CN-A- 105 515 456
- CN-A- 107 370 435
- CN-A- 107 395 079
- CN-A- 107 495 866
- CN-A- 107 565 869
- CN-U- 205 231 983
- US-A1- 2008 230 638
- US-A1- 2013 214 716
- "Synchron-Vollpolmaschine ohne Dämpferwicklung. Steuerbedingungen ED - Schröder; Dirk", 1 January 1995 (1995-01-01), ELEKTRISCHE ANTRIEBE 2. REGELUNG VON ANTRIEBEN, SPRINGER, PAGE(S) 530 - 571, XP009118119, ISBN: 978-3-540-57610-5 * page 140 - page 141 *

## Description

### TECHNICAL FIELD

The present disclosure relates to the technical field of household appliances, in particular to a food processing machine according to the preamble of claim 1.

### BACKGROUND

A cooking machine is a household appliance which integrates functions of soybean milk making, dry powder grinding, fruit juice squeezing, meat stuffing beating, ice shaving and the like into a whole, is used for making various foods such as fruit juice, soybean milk, jam, dry powder, ice shaving, meat stuffing and the like, and is a more diversified product compared to a juicer. Generally, the cooking machine breaks cell walls of the food by controlling the motor at a high speed, so as to release nutrients of the food, and thus is favored by users.

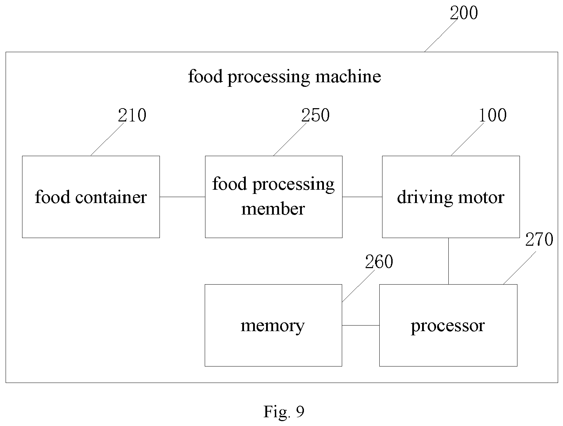

With increasing demands of users and a continuous development of technology, the motor used in the cooking machine has been changed from an original AC series motor to a brushless DC motor. The brushless DC motor not only can achieve forward and reverse rotation, but also has advantages such as low noise and no carbon powder, and thus has gradually been widely used. However, a maximum speed in a no-load or light-load state is under limitation for now, and there is still a need to effectively increase the maximum speed in the no-load or light-load state.
A food processing machine according to the preamble of claim 1 is known from US 2013/214716 A1. This document relates to portable appliances which may be used in the preparation of meals and other foodstuffs such as a stand mixer. The stand mixer has a mixer head and a base having an upstanding pedestal portion supporting the mixer head. The stand mixer includes several mixing elements which may be releasably attached to the mixer head for rotation thereby. These mixing elements mix foodstuffs and other items in a mixer bowl, which is supported on the base. The motor is driven by a periodic drive signal (PWM) that is generated by the driver circuit. The drive signal has a constant frequency and amplitude, but a variable duty cycle (i.e., "on time" versus "off time"). As the duty cycle of the PWM signal increases, larger average currents will be delivered to the motor, and a shaft will operate at higher rotational speeds (when torque is constant). The electronic controller is configured to control operation of the motor and generates a motor control signal such that the rotational speed of the shaft corresponds to a desired speed setting.
EP 2 366 603 A1 is directed to an electric power steering apparatus and an electric motor driving controller used for the apparatus. In Figs. 9 and 10, the principles of supplying a field weakening current to the electric motor are displayed. Thus, the rotational speed of the electric motor can be increased not only by an increase in the duty cycle but also by supplying a field weakening current.
In "Synchron-Vollpolmaschine ohne Dämpferwicklung. Steuerbedingungen ED - Schröder; Dirk", 1 Januar 1995 (1995-01-01), ELEKTRISCHE ANTRIEBE 2. REGELUNG VON ANTRIEBEN, SPRINGER, PAGE(S) 530-571, the principles of a field weakening are explained therein, especially on pages 540 and 541. In particular, the fact that a further increase of the rotational speed can be achieved by the use of this technique is mentioned.

### SUMMARY

The present disclosure seeks to solve at least one of the problems that exist in the related art to at least some extent. Accordingly, it is an object of the present disclosure to provide an improved food processing machine.

The above object is achieved by a food processing machine according to claim 1.

In order to achieve the above object, the embodiment of the present disclosure provides a food processing machine, which includes a food container, a driving motor and a food processing member for processing food, wherein a food containing cavity for containing the food is formed in the food container, and the food processing member extends into the food containing cavity and rotates relatively to the food container under driving by the driving motor, the food processing machine further includes a processor, and a memory having stored therein a rotational speed increasing control program of the food cooking machine that, when executed by the processor, cause the processor to perform a rotational speed increasing control method that includes: when the food processing machine is in a no-load or light-load state, acquiring a rotational speed instruction; analyzing the rotational speed instruction to obtain a target rotational speed of the driving motor, and generating a pulse width modulation (PWM) control signal according to the target rotational speed to control the driving motor; and during controlling the driving motor, gradually increasing a duty ratio of the PWM control signal in a step increment manner until the duty ratio of the PWM control signal reaches 1, and performing a field weakening control on the driving motor to rapidly increase the rotational speed of the driving motor.

In addition, the driving motor includes: a stator iron core including an annular stator yoke portion and a plurality of stator tooth portions, wherein a width of the stator yoke portion is W, the plurality of stator tooth portions are arranged on an inner circumferential surface of the stator yoke portion, a stator tooth slot is formed between two adjacent stator tooth portions, and the plurality of stator tooth portions define a stator hole coaxial with the stator yoke portion, each stator tooth portion including a stator tooth portion body connected with the stator yoke portion and a stator tooth shoe arranged at an inner end of the stator tooth portion body, wherein a width of each stator tooth portion body is V, and W:V= 0.6 to 0.7; and a rotor iron core rotatably arranged in the stator hole and coaxial with the stator hole.

According to the food processing machine provided by the embodiment of the present disclosure, through the rotational speed increasing control method of a food processing machine, the rotational speed of the driving motor can reach a high level within the maximum threshold range allowed by the driving motor.

In an embodiment of the present disclosure, a rotor magnetic field of the driving motor is weakened by increasing a Hall advance angle to cause a stator winding of the driving motor to generate magnetic field in an opposite direction during the field weakening control on the driving motor.

In an embodiment of the present disclosure, the Hall advance angle is increased to a maximum of 50°.

In an embodiment of the present disclosure, the driving motor is a brushless DC motor.

### BRIEF DESCRIPTION OF THE DRAWINGS

Fig. 1 is a schematic view showing a structure of a food processing machine according to an embodiment of the present disclosure;
Fig. 2 is a circuit diagram of a power supply circuit for a food processing machine according to an embodiment of the present disclosure;
Fig. 3 is a flowchart of a rotational speed increasing control method of a food processing machine according to an embodiment of the present disclosure;
Fig. 4 is a flowchart of a rotational speed increasing control method of a food processing machine used in an embodiment of the present disclosure;
Fig. 5 is an assembly schematic diagram of a stator iron core and a rotor iron core of a motor according to an embodiment of the present disclosure;
Fig. 6 is a schematic view showing a structure of a rotor iron core of a motor according to an embodiment of the present disclosure;
Fig. 7 is a schematic view showing a structure of a rotor iron core of a motor according to another embodiment of the present disclosure;
Fig. 8 is a block diagram of a rotational speed increasing control device fora food processing machine according to an embodiment of the present disclosure;
Fig. 9 is a block schematic diagram of a food processing machine according to an embodiment of the present disclosure.

### DETAILED DESCRIPTION

Embodiments of the present disclosure are described in detail below, examples of which are illustrated in the drawings. The same or similar elements are denoted by same reference numerals in different drawings unless indicated otherwise. The embodiments described herein with reference to drawings are explanatory, and used to generally understand the present disclosure. The embodiments shall not be construed to limit the present disclosure.

Hereinafter, the rotational speed increasing control method of a food processing machine, the non-transitory computer-readable storage medium, the rotational speed increasing control device of a food processing machine, and the food processing machine of the embodiment of the present disclosure will be described with reference to the accompanying drawings.

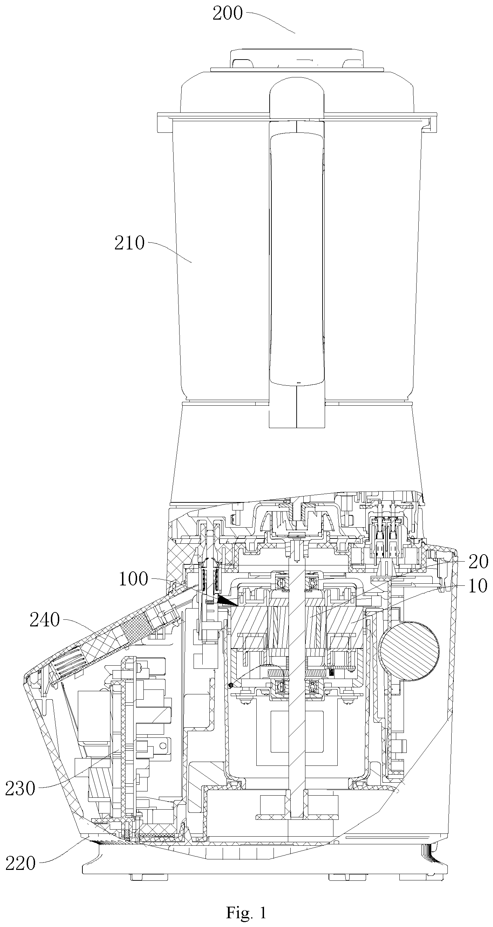

As shown in Fig. 1, a food processing machine 200 according to an embodiment of the present disclosure may include: a food container 210, a driving motor 100 and a food processing member (not shown) for processing food, wherein a food containing cavity for containing the food can be formed in the food container 210, and the food processing member can extend into the food containing cavity and rotate relatively to the food container 210 under driving by the driving motor 100, so that the food in the food containing cavity can be processed.

Further, the food processing machine 200 may further include a housing 220, and the food container 210 may be a cup assembly detachably mounted to the housing 220 to facilitate access of the food and cleaning of the cup assembly. The driving motor 100 may be mounted to the housing 220 and the food processing member may be a knife assembly coupled to the cup assembly, and the driving motor 100 may be drivingly coupled to the knife assembly when the cup assembly is disposed in the housing 220, where by the driving motor 100 may drive the knife assembly to rotate relative to the cup assembly so that the knife assembly may cut or otherwise treat food.

Continuing to refer to Fig. 1, the food processing machine 200 may further include: electronic control system 230 and display assembly 240. The electronic control system 230 includes a circuit board, wherein a power supply circuit and a motor control board of the food processing machine 200 are arranged on the circuit board, the circuit board can be mounted on the base 220, and the circuit board is electrically connected with the driving motor 100 to control the driving motor 100 to work. The display assembly 240 may also be mounted to the housing 220, and the display assembly 240 may be electrically connected to an electronic control system 230, the display assembly 240 may be used to display an operating state of the food processing machine 200, and in a further embodiment of the present disclosure, the display assembly 240 may have operating keys thereon by which a user may control the electronic control system 230 to thereby control an operating mode and state and the like of the food processing machine 200 for more convenient use.

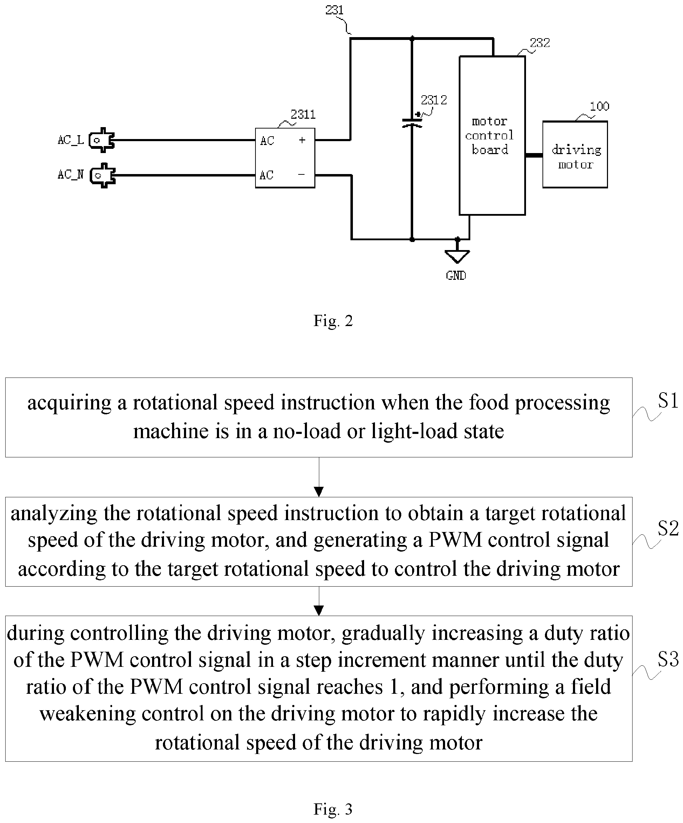

Referring to Fig. 2, a power supply circuit 231 of a food processing machine 200 according to an embodiment of the present disclosure includes: a rectifier bridge 2311 and an electrolytic capacitor 2312, wherein a first input end of the rectifier bridge 2311 is connected to a live wire AC_L of an input alternating current power supply, a second input end of the rectifier bridge 2311 is connected to a neutral wire AC_N of the alternating current power supply, and the rectifier bridge 2311 converts the alternating current power supply into the direct current power supply. A positive end of the electrolytic capacitor 2312 is connected with a first output end of the rectifier bridge 2311, a negative end of the electrolytic capacitor 2312 is connected with a second output end of the rectifier bridge 2311 and then connected with a reference ground GND, two ends of the electrolytic capacitor 2312 are also connected with a motor control board 232, the motor control board 232 is connected with the driving motor 100, the electrolytic capacitor 2312 is used for carrying out voltage stabilizing treatment on a direct-current power supply and supplying the voltage-stabilized direct-current power supply to the motor control board 232. The driving motor 100 is controlled by a motor control board 232.

Specifically, when an AC power supply is connected, the rectifier bridge 2311 rectifies the AC power supply into a DC power supply (the voltage of which can be 310V), and the DC power supply charges the electrolytic capacitor 2312 until the voltage corresponding to the DC power supply (310V) is charged. When the driving motor 100 needs to be controlled to operate, the motor control board 232 applies the DC power supply to the driving motor 100 in the form of a PWM waveform, such that the driving motor 100 is operated at a predetermined rotational speed. Among them, with the continuous improvement of the user's requirements and the continuous development of the technology, the driving motor 100 for the food processing machine is changed from the original AC series excited motor to the brushless DC motor, which not only can realize the forward and reverse rotation, but also has the advantages of low noise, no carbon powder and the like, so that it is gradually widely used, but the maximum rotational speed under the no-load or light-load state is still limited to a certain extent. Therefore, how to effectively increase the maximum rotational speed under no-load or light-load conditions is described in detail below.

Fig. 3 is a flowchart of a rotational speed increasing control method of a food processing machine according to an embodiment of the present disclosure. As shown in Fig. 3, the rotational speed increasing control method of a food processing machine in the embodiment of the present disclosure includes the following steps.

S1, acquiring a rotational speed instruction when the food processing machine is in a no-load or light-load state.

For example, after the food processing machine is electrically operated, a user can set the working mode and the rotational speed of the food processing machine through the display assembly, and select a start button to enable the food processing machine to start working. For example, when the user needs to clean the food processing machine, the cleaning mode can be selected, and the food processing machine is in a no-load or light-load state; as another example, when a user needs to whip fruit juice, a vegetable and fruit juice mode can be selected, while at this time, the food processing machine can first crush food at a low speed and a large torque, and when the food is crushed to a certain extent, the food processing machine can be considered to be in a no-load or light-load state (in practical applications, it can be judged according to a load torque or an operating current of the driving motor, etc.). When the food processing machine is in a no-load or light-load state, a rotational speed instruction of the driving motor is acquired, wherein when a user selects the cleaning mode, the rotational speed instruction can be a rotational speed instruction set by the user or a default rotational speed instruction of a system; the rotational speed instruction may be a pre-set rotational speed instruction in the system when the user selects a vegetable and fruit juice mode or the like.

S2, analyzing the rotational speed instruction to obtain a target rotational speed of the driving motor, and generating a PWM control signal according to the target rotational speed to control the driving motor.

S3, during controlling the driving motor, gradually increasing a duty ratio of the PWM control signal in a step increment manner until the duty ratio of the PWM control signal reaches 1, and performing a field weakening control on the driving motor to rapidly increase the rotational speed of the driving motor. The step increment manner refers to gradually increasing the duty ratio of the PWM control signal according to a certain step.

In some embodiments of the present disclosure, during field weakening control on the driving motor, a rotor field of the driving motor is weakened by increasing a Hall advance angle so that a stator winding of the driving motor generates magnetic field in an opposite direction. The Hall advance angle refers to a certain angle for advancing the Hall signal output by the Hall sensor, the magnetic field generated by the rotor can be weakened by the magnetic field in the opposite direction generated by the stator winding of the driving motor with increasing the Hall advance angle, while the Lorentz force borne by the rotor in the space magnetic field is increased, and the rotational speed of the driving motor is greatly improved. Generally, the larger the Hall advance angle, the better, but generally it does not exceed 50°, i.e., in embodiments of the present disclosure, the Hall advance angle is increased to the maximum of 50 °.

For example, after the food processing machine is electrically operated, whether the current food processing machine is in a no-load or light-load state is judged. If the food processing machine is in the no-load or light-load state, a rotational speed instruction is acquired, the rotational speed instruction is analyzed to obtain a target rotational speed of a driving motor, and a PWM control signal is generated according to the target rotational speed to control the driving motor. During controlling the driving motor, the duty ratio of the PWM control signal can be gradually increased according to a certain step length until the duty ratio of the PWM control signal reaches 1, that is, the full-on state is achieved, and meanwhile, the advance angle is compensated for the Hall signal output by the actual Hall sensor to achieve the effect that the magnetic field in the opposite direction generated by the stator winding can weaken the magnetic field of the rotor. The Lorentz force on the rotor in the space magnetic field is increased, so that the rotational speed is greatly increased.

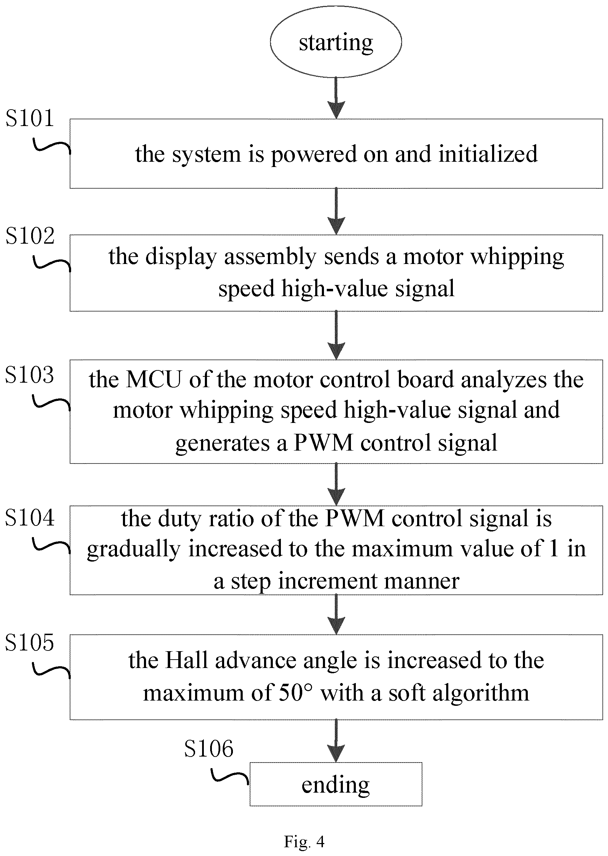

Fig. 4 is a flowchart of a rotational speed increasing control method of a food processing machine according to one embodiment of the present disclosure, and as shown in Fig. 4, the rotational speed increasing control method of a food processing machine includes the following steps;
S101, the system is powered on and initialized.
S102, the display assembly sends a motor whipping speed high-value signal.
S103, the MCU of the motor control board analyzes the motor whipping speed high-value signal and generates a PWM control signal.
S104, the duty ratio of the PWM control signal is gradually increased to the maximum value of 1 in a step increment manner.
S105, the Hall advance angle is increased to the maximum of 50° with a software algorithm.
S106, ending.

Therefore, according to the rotational speed increasing control method of a food processing machine in the embodiment of the present disclosure, when the food processing machine is in the no-load or light-load state, the duty ratio of the PWM control signal is gradually increased in a step increment manner, and when the duty ratio of the PWM control signal reaches the maximum value of 1, the rotational speed of the driving motor is greatly increased by increasing the Hall advance angle, so that the rotational speed of the motor is improved under no-load or light-load status.

Further, as shown in Figs. 1 and 5-7, a driving motor 100 for a food processing machine 200 according to an embodiment of the present disclosure may include: a stator iron core 10 and a rotor iron core 20. The stator iron core 10 may include: a stator yoke portion 11 which may be annular and a plurality of stator tooth portions 12 which may be provided on an inner circumferential surface of the stator yoke portion 11, and the plurality of stator tooth portions 12 may define a stator hole 102 coaxial with the stator yoke portion 11, and the stator yoke portion 11 may provide mechanical support for the plurality of stator tooth portions 12 to fix the position of the stator tooth portions 12. A plurality of stator tooth portions 12 may be spaced apart in the circumferential direction of the stator yoke portion 11, a stator slot 101 may be formed between two adjacent stator tooth portions 12, and winding 14 of the driving motor 100 may be wound around the stator tooth portions 12 through the stator slot 101.

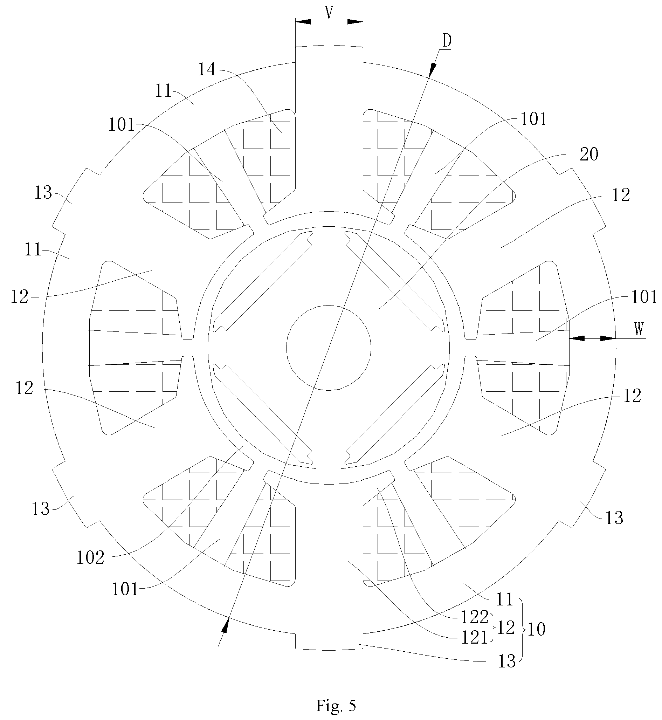

It should be noted that in the present disclosure, the number of stator tooth portions 12 may be flexibly set according to practical requirements. Six stator tooth portions 12 in Fig. 5 are for illustrative purposes only, and in other embodiments of the present disclosure, two, four or more stator tooth portions 12 may be provided, all within the scope of the present disclosure.

In the related art, the ratio of a yoke width to a tooth width of the stator of the driving motor has no fixed value, and usually the ratio is 0.4-0.6, so that the yoke portion of the stator bears a larger proportion of iron loss to reduce the heating temperature rise of the stator tooth portion, but it leads to a problem that the temperature rise of the yoke portion of the stator is too high. If a shell capable of conducting magnetism is sleeved on the driving motor to solve the problem, the magnetic flux density of the stator yoke portion can be reduced to a certain extent, and the iron loss of the stator yoke portion can be reduced, but the material and process cost is increased.

However, in the present disclosure, as shown with reference to Fig. 5, each stator tooth portion 12 may include: stator tooth portion body 121 and stator tooth shoe 122. Here, the stator tooth portion body 121 is connected to the stator yoke portion 11 so that the stator tooth portion 12 and the stator yoke portion 11 can be integrally connected. The stator tooth shoe 122 is provided at an inner end of the stator tooth portion body 121 to reduce the air gap reluctance between the stator tooth portion 12 and the rotor iron core 20 and improve the magnetic field distribution.

Further, a width of the stator yoke portion 11 is W, and a width of each stator tooth portion body 121 is V When a maximum radial dimension D of the stator iron core 10 is fixed, if W:V is too small, the magnetic flux density of the stator tooth portions 12 is too high, and even the saturation of the magnetic flux density occurs. During the operation of the stator iron core 10, the iron loss of the stator tooth portions 12 is large, and the temperature rise of the stator tooth portions 12 is too high. In addition, the stator tooth slot 101 between the two adjacent stator tooth portions 12 is too small, and the distance between the two adjacent stator tooth portions 12 is too short, so that an electromagnetic loop is easily formed, thereby reducing the energy efficiency of the stator iron core 10. If W:V is excessively large, the magnetic flux density of the stator yoke portion 11 is excessively high, and even the saturation of the magnetic flux density occurs, and during the operation of the stator iron core 10, the iron loss of the stator yoke portion 11 is large and the temperature rise is excessively high.

Therefore, in the embodiments of the present disclosure, the width W of the stator yoke portion 11 and the width V of each stator tooth portion body 121 satisfy W:V = 0.6 to 0.7. The stator yoke portion 11 and the stator tooth portion 12 can more reasonably distribute the magnetic flux density of the stator iron core 10, prevent the local temperature rise of the stator iron core 10 from being higher, and make the temperature rise of the stator iron core 10 more even. The service life and the safety performance of the stator iron core 10 are improved. For example, in some embodiments of the present disclosure, the ratio W:V of the width W of the stator yoke portion 11 to the width V of the stator tooth portion body 121 may be 0.6, 0.62, 0.65, 0.68, 0.7, etc., respectively.

It should be noted that in the present disclosure, the width W of the stator yoke portion 11 can be understood as the distance between the inner and outer circumferential surfaces of the annular stator yoke portion 11, and the width V of the stator tooth portion body 121 can be understood as the distance between two side surfaces of the stator tooth portion body 121 in the circumferential direction of the stator yoke portion 11.

In addition, the distance between the inner circumferential surface and the outer circumferential surface of the annular stator yoke portion 11 may be the same everywhere. Of course, the distance between the inner circumferential surface and the outer circumferential surface of the annular stator yoke portion 11 may not be the same everywhere, and the distance between the inner circumferential surface and the outer circumferential surface of the annular stator yoke portion 11 may or may not be the same everywhere. However, in the present disclosure, the width W at any position of the stator yoke portion 11 and the width V at any position of the stator tooth portion body 121 satisfy W:V = 0.6 to 0.7.

According to the embodiment of the present disclosure, the width W of the stator yoke portion 11 and the width V of the stator tooth portion body 121 of the stator iron core 10 of the food processing machine 200 satisfy W:V=0.6 to 0.7. The magnetic flux density distribution is more reasonable, the temperature rise is more even, and the service life and the safety are improved. In order to further lower the temperature rise of the stator iron core 10, according to a further embodiment of the present disclosure, the width W of the stator yoke portion 11 and the width V of the stator tooth portion body 121 can further satisfy: W:V=0.64 to 0.66.

According to some embodiments of the present disclosure, as shown in Fig. 5, the width of the stator yoke portion 11 may be the same everywhere, and the width of each stator tooth portion body 121 may be the same everywhere, so that the mold design of the stator iron core 10 molding process is facilitated, and the process is simpler.

Further, as shown with continuing reference to Fig. 5, the stator yoke portion 11 may have a circular shape in which both the inner contour and the outer contour are circular, and the stator yoke portion 11 is simple in structure and convenient to mold.

In addition, a bisector of the width of each stator tooth portion body 121 may pass through a center of the stator hole 102, that is, each stator tooth portion body 121 extends in the radial direction of the stator hole 102, facilitating more symmetrical and uniform distribution of the magnetic field.

Further, as shown in Fig. 5, in the circumferential direction of the stator yoke portion 11, both ends of the stator tooth shoe 122 may extend beyond the stator tooth portion body 121, respectively, and adjacent ends of two adjacent stator tooth shoes 122 are spaced apart or connected. Thereby, it is possible to fix a winding 14 wound around the stator tooth portion 12, preventing the winding 14 from being loosened from the inner end of the stator tooth portion 12, and fixing the winding 14 more reliably.

The stator iron core 10 according to the embodiment of the present disclosure may further include a plurality of positioning protrusions 13, which may be provided on the outer circumferential surface of the stator yoke portion 11 at intervals along the circumferential direction of the stator yoke portion 11, and each positioning protrusion 13 may extend in the radial direction of the stator yoke portion 11. Therefore, when the driving motor 100 is assembled, the stator iron core 10 can be positioned with the bracket of the driving motor 100 through the positioning protrusion 13, so that the driving motor 100 is simpler and more convenient to assemble and accurate in positioning.

It should be noted that the number and the arrangement positions of the positioning protrusions 13 are not particularly limited in the present disclosure. For example, in the embodiment shown in Fig. 5, the number of the positioning protrusions 13 is equal to the number of the stator tooth portions 12, and the positioning protrusions 13 are arranged on the outer circumferential surface of the stator yoke portion 11 in a one-to-one correspondence with the positions of the stator tooth portions 12 to facilitate mold design and molding of the stator iron core 10. In some embodiments not shown in the present disclosure, the number and positions of the positioning protrusions 13 may not correspond to the stator tooth portions 12 one by one, and only the requirement that the positioning protrusions 13 are arranged on the outer circumferential surface of the stator yoke portion 11 at intervals to position the stator iron core 10 is met.

Further, as shown in Fig. 5, the rotor iron core 20 may be disposed within the stator hole 102, and the rotor iron core 20 may be coaxial with the stator hole 102. The rotor iron core 20 is rotatable about an axis in the stator hole 102, and the rotor iron core 20 may be spaced apart from the inner circumferential surface of the stator hole 102 by a predetermined distance to make the rotor iron core 20 rotate more smoothly.

As a result, a plurality of stator tooth portions 12 are formed into a plurality of pairs of poles after current flows through the winding 14 of the driving motor 100, a magnetic field is generated in the stator hole 102, and the rotor iron core 20 positioned in the stator hole 102 can rotate around an axis under the action of the magnetic field to realize conversion and output of electric energy.

In the related art, the ratio of the rotor diameter to the stator diameter of the driving motor has no fixed value and is usually 0.60 to 0.75, and in this range, although the driving motor can output a large torque, the high-speed performance of the driving motor is poor, and the cogging torque of the driving motor is increased, and the driving motor is liable to generate vibration and a large noise. If the above problem is solved by adding a field weakening effect in the algorithm of the drive control circuit, the energy efficiency of the driving motor is reduced.

In the present disclosure, however, the maximum radial dimension D of the stator yoke portion 11 and the maximum radial dimension d of the rotor iron core 20 satisfy 0.4≤d/D≤0.55. For example, in some embodiments of the present disclosure, the ratio d/D of the maximum radial dimension D of the stator yoke portion 11 to the maximum radial dimension d of the rotor iron core 20 may be 0.45, 0.48, 0.51, 0.54, etc., respectively.

For equal-shaped stator iron cores 10, when the maximum radial dimension D of the stator yoke portion 11 is fixed, the maximum radial dimension d of the rotor iron core 20 is too small when the d/D is too small (e.g., less than 0.4). If the driving motor 100 operates at a low speed, for example, the rotational speed of the driving motor 100 is less than 5000 rpm, the load capacity of the rotor iron core 20 is too small. In the condition of driving the same load, a rotor iron core 20 having a too small maximum radial dimension d may generate heat severely, affect the normal operation of the driving motor 100, reduce the efficiency of the driving motor 100, and may even be damaged. When the d/D is excessively large (e.g., greater than 0.55), the cogging torque of the driving motor 100 becomes large, and the rotational inertia of the rotor iron core 20 becomes large. If the driving motor 100 is operated at a high speed, for example, the rotational speed of the driving motor 100 is > 10,000 rpm, the driving motor 100 generates vibration, thereby generating a large noise, affecting the performance of the driving motor 100 and the user's experience in use.

Therefore, in some embodiments of the present disclosure, the maximum radial dimension D of the stator yoke portion 11 and the maximum radial dimension d of the rotor iron core 20 can satisfy 0.4≤d/D≤0.55. The output force of the rotor iron core 20 of the driving motor 100 can be improved, the efficiency of the driving motor 100 is higher, the rotor iron core 20 is prevented from heating, and the driving motor 100 is safer. In addition, the maximum radial dimension d of the rotor iron core 20 can be made small, so that inertia generated by the rotor iron core 20 during high-speed rotation is eliminated, and large vibration noise generated by the driving motor 100 is prevented.

In addition, it should be noted that in some embodiments of the present disclosure, the outer contours of the stator iron core 10 and the rotor iron core 20 are circular, and the maximum radial dimension specifies the diameter of the circular outer contours of the stator iron core 10 and the rotor iron core 20. While in other embodiments of the present disclosure, the outer contour of the stator iron core 10 and the rotor iron core 20 is not circular, the maximum radial dimension may be understood as the dimension of the position where the radial dimension through the axis of the outer contour of the stator iron core 10 and the rotor iron core 20 is the largest.

According to the embodiment of the present disclosure, the maximum radial dimension D of the stator yoke portion 11 and the maximum radial dimension d of the rotor iron core 20 of the driving motor 100 for the food processing machine 200 satisfy 0.4≤d/D≤0.55, so that the problems of small low-speed output force and large high-speed vibration noise of the driving motor 100 are effectively solved, and the efficiency and safety performance of the driving motor 100 are improved. In order to further improve the low-speed output force of the driving motor 100 and reduce the high-speed noise of the driving motor 100, according to a further embodiment of the present disclosure, the maximum radial dimension D of the stator yoke portion 11 and the maximum radial dimension d of the rotor iron core 20 can further satisfy: 0.5≤d/D≤0.55.

According to some embodiments of the present disclosure, as shown in Figs. 5 to 7, a plurality of magnet slots 23 may be provided in the rotor iron core 20, the plurality of magnet slots 23 may be spaced apart in the circumferential direction of the rotor iron core 20, both ends of the magnet slots 23 may extend to both axial ends of the rotor iron core 20, respectively, and a plurality of permanent magnets 25 may be inserted into the plurality of magnet slots 23 in a one-to-one correspondence.

Therefore, the permanent magnet 25 can extend to both axial ends of the rotor iron core 20 in the magnet slot 23, the position of the permanent magnet 25 is firmly and reliably fixed, and the permanent magnet 25 can be effectively prevented from loosening. A plurality of permanent magnets 25 can form a plurality of pairs of magnetic poles to generate a magnetic field, thereby generating induced electromotive force and realizing conversion of electric energy. The rotor iron core 20 adopting the permanent magnet 25 does not need to be provided with an excitation coil, so that the weight of the driving motor 100 is reduced, the size of the driving motor 100 is reduced, excitation is not required to be started during starting, and starting is quicker and more energy-saving.

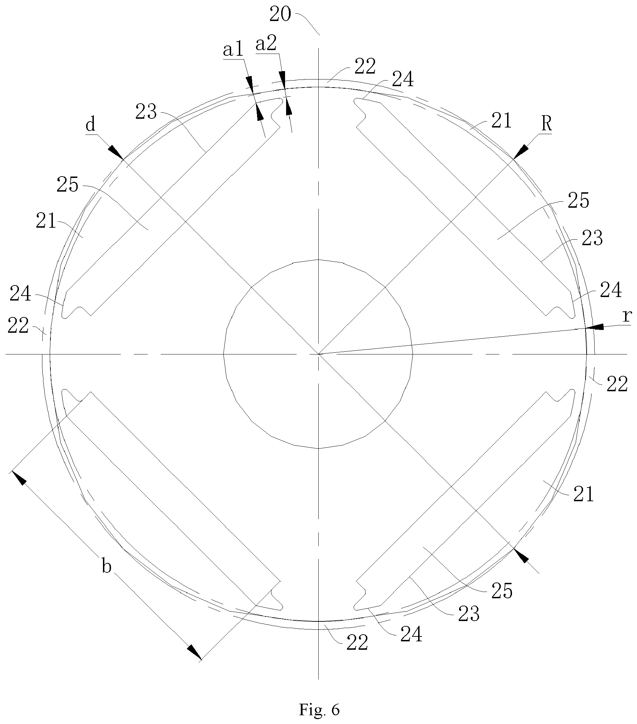

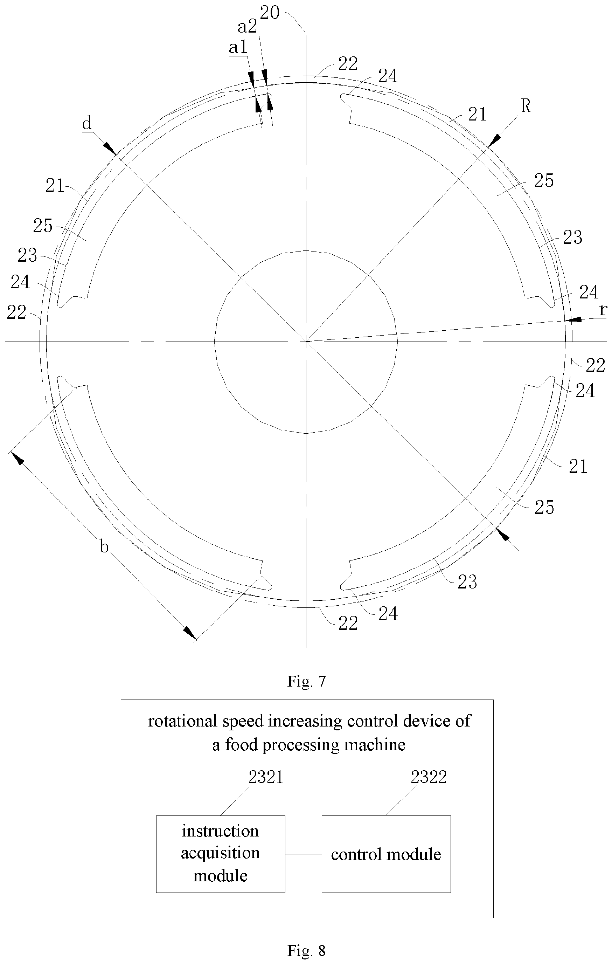

It should be noted that the number of the magnet slots 23 and the permanent magnets 25 is not particularly limited in the present disclosure, and it is only necessary to satisfy the requirement that the plurality of permanent magnets 25 are inserted into the plurality of magnet slots 23 in a one-to-one correspondence to fix the permanent magnets 25 and form a plurality of magnetic poles. For example, in the embodiment shown in Figs. 6 and 7, the magnet slots 23 and the permanent magnets 25 are four, respectively, and the four permanent magnets 25 are inserted into the four magnet slots 23, respectively. As another example, in other embodiments of the present disclosure, the magnet slots 23 and the permanent magnets 25 may be two, six, eight or more, respectively, all within the scope of the present disclosure.

In addition, each magnet slot 23 may be provided with a positioning slot 24 at at least one end in the circumferential direction of the rotor iron core 20, the permanent magnet 25 may be inserted into the positioning slot 24 while being inserted into the magnet slot 23, and the positioning slot 24 may further define the position of the permanent magnet 25, so that the position of the permanent magnet 25 is more accurately and firmly fixed.

Further, as shown in Figs. 6 and 7, the linear distance of each magnet slot 23 at both ends in the circumferential direction of the rotor iron core 20 is b, the maximum radial distance of the center of the rotor iron core 20 from the outer circumferential surface of the rotor iron core 20 is R, and b and R satisfy b:R=0.95 to 1.0. When b:R<0.95, the length of the permanent magnet 25 in the magnet slot 23 is too short which reduces the utilization rate of the rotor iron core 20, thereby reducing the energy efficiency of the driving motor 100; when b:R>1, the magnetic flux leakage of the rotor iron core 20 is increased, and the energy efficiency of the driving motor 100 is also reduced. Therefore, in some embodiments of the present disclosure, where b:R=0.95 to 1.0, for example, in some embodiments of the present disclosure, b:R may be 0.95, 0.96, 0.97, 0.98, 0.99, 1.0, etc., respectively, effectively ensuring the energy efficiency of the driving motor 100.

According to some embodiments of the present disclosure, as shown in Figs. 6 and 7, the minimum distance of the magnet slot 23 from the outer circumferential surface of the rotor iron core 20 is a1, the minimum distance of the stator slot 24 from the outer circumferential surface of the rotor iron core 20 is a2, and the minimum distance of the permanent magnet 25 from the outer circumferential surface of the rotor iron core 20 can be understood as the value of the smaller one of a1 and a2, i.e., min (a1, a2). When min (a1, a2) is too small, the mechanical strength of the rotor iron core 20 is reduced, so that the reliability of the rotor iron core 20 is reduced; when min (a1, a2) is too large, the magnetic flux leakage of the rotor iron core 20 is increased, thereby reducing the energy efficiency of the driving motor 100. Therefore, in some embodiments of the present disclosure, min (a1, a2)=0.8 mm-1.8 mm, ensuring the mechanical strength and energy efficiency of the rotor iron core 20. For example, in some specific embodiments of the present disclosure, min (a1, a2) may be 0.8 mm, 1.0 mm, 1.2 mm, 1.4 mm, 1.6 mm, 1.8 mm, etc., respectively.

In addition, the shape of the magnet slot 23 is not particularly limited herein, and only the requirement that a bisector in a length direction of the magnet slot 23 passes through the center of the rotor iron core 20 is met, so that the magnetic field generated by the permanent magnet 25 in the magnet slot 23 is more uniformly distributed. For example, in the example shown in Fig. 6, the magnet slot 23 is an elongated straight slot extending in the chord direction of the rotor iron core 20, and the distance b at both ends of the straight slot is the extended length of the straight slot. In the example shown in Fig. 7, the magnet slot 23 is an elongated arc-shaped slot extending in the circumferential direction of the rotor iron core 20, and the distance b between both ends of the arc-shaped slot is the chord length of the arc-shaped slot.

In some embodiments of the present disclosure, as shown in Figs. 6 and 7, a plurality of pole teeth 21 may be formed along an outer circumferential edge of the rotor iron core 20, the plurality of pole teeth 21 may be distributed along the circumference of the rotor iron core 20 and protrude outward, the tooth slot 22 is formed between two adjacent pole teeth 21, and in embodiments having a plurality of magnet slots 23, the magnet slots 23 and the pole tooth 21 may be arranged in one-to-one correspondence. At this time, the rotor iron core 20 is formed as a rotor of a salient pole structure, and compared with a rotor of a full circle shape in the related art, the rotor of the salient pole structure can prevent magnetic flux leakage and a cogging effect between rotor poles, thereby improving the efficiency of the rotor iron core 20.

Further, it should be noted that, for the rotor iron core 20 having a plurality of pole teeth 21, the maximum outer diameter dimension d of the rotor iron core 20 refers to the line dimension of the tooth tops of the two pole teeth 21 where the line connecting the tooth tops passes through the axis of the rotor iron core 20.

Further, with continuing reference to Figs. 6 and 7, the normal tooth profile of the pole tooth 21 may be formed in the shape of a circular arc, the outer circumferential edge of the axial section of the rotor iron core 20 may be formed in the shape of a plurality of circular arcs sequentially connected, and tooth slots 22 are formed at the junction of two adjacent circular arcs.

Further, as shown in Figs. 6 and 7, the radius of the circle having the center of the rotor iron core 20 as a circle center and tangent to the tooth top of the pole tooth 21 is R (at this time, R = 0.5d), and the radius of the circle tangent to a bottom of the tooth slot 22 and having the center of the rotor iron core 20 as the circle center is r. If r:R<0.96, the extended length of the pole tooth 21 along the circumferential direction of the rotor iron core 20 is too short, thereby reducing the performance of the motor 100; if r:R>0.98, the tooth slot 22 is excessively small, and the noise interference due to the tooth slots cannot be effectively reduced when the driving motor 100 is operated. Thus, in some embodiments of the present disclosure, r:R=0.96 to 0.98, e.g., in some embodiments of the present disclosure, r:R may be 0.96, 0.97, 0.98, etc., respectively, effectively reducing cogging effect while ensuring efficiency of the driving motor 100.

The driving motor for the food processing machine according to the embodiments of the present disclosure can be a variable frequency motor, and the variable frequency motor can provide different rotational speeds, torques, time and the like according to different types of food required to be processed by the food processing machine, so that the food processing machine with the driving motor is intellectualized. In addition, the variable-frequency motor does not need a structure such as a carbon brush for reversing, does not have carbon brush abrasion, is lower in running noise, is beneficial to improving the service life of the food processing machine and improving the use feeling of users, and in some embodiments of the present disclosure, the driving motor can be a variable-frequency controlled direct-current brushless motor.

Alternatively, in the present disclosure, the food processing machine may be a wall breaker, a juice extractor, a juice extractor, a soymilk maker, or the like. The wall breaking machine is high in rotational speed, can be used for preparing harder foods, and can fully break the walls and release a large amount of phytochemicals existing in the peels, fruit pits and rhizomes of the foods; the rotational speed of the raw juice machine is low, and food is processed in a pushing type extrusion and low-flexibility extraction mode; the rotational speed of the juicer is high, and crushing and mixing of various foods can be realized; the rotational speed of the soybean milk machine is high, and the functions of preheating, pulping, boiling, delayed cooking, full automation and the like can be realized. The driving motor according to the embodiment of the present disclosure can be applied to more kinds of food processing machines, meets more use requirements and has stronger practicability. In addition, according to the rotational speed increasing control method of a food processing machine in the embodiment of the present disclosure, the rotational speed of the driving motor can be rapidly increased within the maximum threshold range allowed by the driving motor when the food processing machine is in the no-load or light-load state.

In addition, an embodiment of the present disclosure provides the use of a non-transitory computer-readable storage medium having stored therein a computer program that, when executed by a processor, causes the processor to perform a rotational speed increasing control method in the food processing machine of the present disclosure.

According to the non-transitory computer-readable storage medium, by performing the rotational speed increasing control method of a food processing machine, the rotational speed of the driving motor can reach a high level within the maximum threshold range allowed by the driving motor.

Fig. 8 is a block diagram of a rotational speed increasing control device for a food processing machine according to an embodiment of the present disclosure.

In the embodiment of the present disclosure, as shown in Fig. 1, a food processing machine 200 includes a food container 210 in which a food containing cavity for containing food is formed, a driving motor 100, and a food processing member (not shown) for processing the food, the food processing member extending into the food containing cavity and rotating with respect to the food container 210 under driving by the driving motor 100.

As shown in Fig. 8, the rotational speed increasing control device for a food processing machine of the embodiment of the present disclosure includes: an instruction acquisition module 2321 configured to acquire a rotational speed instruction when the food processing machine 200 is in a no-load or light-load state, and a control module 2322. The control module 2322 is configured to analyze the rotational speed instruction to obtain a target rotational speed of the driving motor 100, generate a PWM control signal according to the target rotational speed to control the driving motor 100, and gradually increase a duty ratio of the PWM control signal in a step increment manner during controlling the driving motor 100 until the duty ratio of the PWM control signal reaches 1, and perform a field weakening control on the driving motor 100. The rotational speed of the driving motor 100 is rapidly increased.

According to one embodiment of the present disclosure, the control module 2322 is further configured to weaken a rotor field of the driving motor 100 by increasing a Hall advance angle to cause a stator winding of the driving motor 100 to generate magnetic field in an opposite direction during field weakening control on the driving motor 100.

According to one embodiment of the present disclosure, the Hall advance angle is increased to a maximum of 50°.

According to one embodiment of the present disclosure, the driving motor 100 is a brushless DC motor.

It should be noted that the details not disclosed in the rotational speed increasing control device for a food processing machine of the embodiment of the present disclosure are referred to the details disclosed in the rotational speed increasing control method for a food processing machine of the embodiment of the present disclosure and will not be described in detail herein.

According to the rotational speed increasing control device for a food processing machine of the embodiment of the present disclosure, when the food processing machine is in a no-load or light-load state, the rotational speed instruction is obtained through the instruction acquisition module, the rotational speed instruction is analyzed through the control module to obtain the target rotational speed of the driving motor, the PWM control signal is generated according to the target rotational speed to control the driving motor, and during controlling the driving motor, the duty ratio of the PWM control signal is gradually increased in a step increment manner until the duty ratio of the PWM control signal reaches 1, and field weakening control is performed on the driving motor to rapidly improve the rotational speed of the driving motor. Therefore, the rotational speed of the driving motor can reach high within the maximum threshold range allowed by the driving motor.

In addition, an embodiment of the present disclosure also provides a food processing machine which includes the rotational speed increasing control device for a food processing machine described above.

According to the food processing machine provided by the embodiment of the present disclosure, through the rotational speed increasing control device for a food processing machine, the rotational speed of the driving motor can reach a high level within the maximum threshold range allowed by the driving motor.

Fig. 9 is a block schematic diagram of a food processing machine according to one embodiment of the present disclosure.

As shown in Fig. 9, a food processing machine 200 according to an embodiment of the present disclosure includes a food container 210, a driving motor 100 and a food processing member 250 for processing food, wherein a food containing cavity for containing food is formed in the food container 210, the food processing member 250 extends into the food containing cavity and rotates relative to the food container 210 under driving by the driving motor 100, and the food processing machine 200 further includes a memory 260, a processor 270 and a rotational speed increasing control program of the food processing machine stored in the memory 260 and operable on the processor 270, wherein the rotational speed increasing control program, when executed by the processor 270, causes the processor 270 to perform the rotational speed increasing control method of a food processing machine as described above.

According to the food processing machine provided by the embodiment of the present disclosure, through the rotational speed increasing control method for a food processing machine, the rotational speed of the driving motor can reach a high level within the maximum threshold range allowed by the driving motor.

## Claims

1. A food processing machine (200) comprising a food container (210), a driving motor (100) and a food processing member for processing food, wherein a food containing cavity for containing the food is formed in the food container (210), and the food processing member extends into the food containing cavity and rotates relatively to the food container (210) under driving by the driving motor (100), the food processing machine (200) further comprising
a processor (270), and
a memory (260) having stored therein a rotational speed increasing control program of the food processing machine that, when executed by the processor, cause the processor to perform a rotational speed increasing control method in the food processing machine (200), wherein the rotational speed increasing control method comprises:
when the food processing machine (200) is in a no-load or light-load state, acquiring a rotational speed instruction;
analyzing the rotational speed instruction to obtain a target rotational speed of the driving motor (100), and generating a pulse width modulation (PWM) control signal according to the target rotational speed to control the driving motor (100); and
during controlling the driving motor (100), gradually increasing a duty ratio of the PWM control signal in a step increment manner until the duty ratio of the PWM control signal reaches 1, and performing a field weakening control on the driving motor (100) to rapidly increase the rotational speed of the driving motor (100), **characterized in that** the driving motor (100) comprises:
a stator iron core (10), comprising an annular stator yoke portion (11) and a plurality of stator tooth portions (12), wherein a width of the stator yoke portion (11) is W, the plurality of stator tooth portions (12) are arranged on an inner circumferential surface of the stator yoke portion (11), a stator tooth slot (101) is formed between two adjacent stator tooth portions (12), and the plurality of stator tooth portions (12) define a stator hole (102) coaxial with the stator yoke portion (11), each stator tooth portion (12) comprising a stator tooth portion body (121) connected with the stator yoke portion (11) and a stator tooth shoe (122) arranged at an inner end of the stator tooth portion (12) body, wherein a width of each stator tooth portion body (121) is V, and W:V= 0.6 to 0.7; and
a rotor iron core (20), rotatably arranged in the stator hole (102) and coaxial with the stator hole (102.

2. The food processing machine (200) according to claim 1, wherein the rotational speed increasing control method comprises that a rotor magnetic field of the driving motor (100) is weakened by increasing a Hall advance angle to cause a stator winding of the driving motor (100) to generate a magnetic field in an opposite direction during the field weakening control on the driving motor (100).

3. The food processing machine (200) according to claim 2, wherein the rotational speed increasing control method comprises that the Hall advance angle is increased to a maximum of 50°.

4. The food processing machine (200) according to one of claims 1 to 3, wherein the driving motor (100) is a brushless DC motor.

## Patentansprüche

1. Eine Küchenmaschine (200), die einen Nahrungsmittelbehälter (210), einen Antriebsmotor (100) und ein Nahrungsmittelverarbeitungselement zum Verarbeiten von Nahrungsmitteln umfasst, wobei in dem Nahrungsmittelbehälter (210) ein Nahrungsmittel enthaltender Hohlraum zum Aufnehmen des Nahrungsmittels ausgebildet ist, und wobei sich das Nahrungsmittelverarbeitungselement in den Nahrungsmittel enthaltenden Hohlraum erstreckt und sich relativ zu dem Nahrungsmittelbehälter (210) unter Antrieb durch den Antriebsmotor (100) dreht, die Küchenmaschine (200) umfasst weiter
einen Mikroprozessor (270), und
einen Speicher (260), in dem ein Steuerprogramm zur Erhöhung der Drehzahl der Küchenmaschine gespeichert ist, welches, wenn es von dem Mikroprozessor ausgeführt wird, den Mikroprozessor veranlasst, ein Steuerverfahren zur Erhöhung der Drehzahl in der Küchenmaschine (200) durchzuführen, wobei das Steuerverfahren zur Erhöhung der Drehzahl folgendes umfasst:
wenn die Küchenmaschine (200) sich in einem Leerlauf- oder Leichtlaufzustand befindet, Erfassen eines Drehzahlsollwerts;
Analysieren des Drehzahlsollwerts, um eine Soll-Drehzahl des Antriebsmotors (100) zu erhalten, und Erzeugen eines Pulsweitenmodulations-(PWM)-Steuersignals entsprechend der Soll-Drehzahl, um den Antriebsmotor (100) zu steuern; und
während des Ansteuerns des Antriebsmotors (100), allmähliches Erhöhen eines Lastverhältnisses des PWM-Steuersignals in einer schrittweisen Erhöhung, bis das Lastverhältnis des PWM-Steuersignals 1 erreicht, und Durchführen einer Feldschwächungssteuerung an dem Antriebsmotor (100), um die Drehzahl des Antriebsmotors (100) schnell zu erhöhen,
**dadurch gekennzeichnet, dass** der Antriebsmotor (100) umfasst:
einen Statoreisenkern (10), der einen ringförmigen Statorjochabschnitt (11) und eine Vielzahl von Statorzahnabschnitten (12) umfasst, wobei eine Breite des Statorjochabschnitts (11) W ist, die Vielzahl von Statorzahnabschnitten (12) an einer inneren Umfangsfläche des Statorjochabschnitts (11) angeordnet sind, ein Statorzahnschlitz (101) zwischen zwei benachbarten Statorzahnabschnitten (12) ausgebildet ist, und die Vielzahl von Statorzahnabschnitten (12) ein Statorloch (102) definieren das koaxial mit dem Statorjochabschnitt (11) ist, wobei jeder Statorzahnabschnitt (12) einen Statorzahnabschnittskörper (121), der mit dem Statorjochabschnitt (11) verbunden ist, und einen Statorzahnschuh (122) umfasst, der an einem inneren Ende des Statorzahnabschnitts (12) angeordnet ist, und wobei eine Breite jedes Statorzahnabschnittskörpers (121) V ist, und das Verhältnis W:V gleich 0,6 bis 0,7 ist; und
einen Rotoreisenkern (20), der drehbar in dem Statorloch (102) und koaxial zu dem Statorloch (102) angeordnet ist.

2. Die Küchenmaschine (200) nach Anspruch 1, wobei das Steuerverfahren zur Erhöhung der Drehzahl umfasst, dass ein Rotormagnetfeld des Antriebsmotors (100) durch ein Erhöhen eines Hall-Vorlaufwinkels abgeschwächt wird, um zu bewirken, dass während der Feldschwächungssteuerung an dem Antriebsmotor (100) eine Statorwicklung des Antriebsmotors (100) ein Magnetfeld in einer entgegengesetzten Richtung erzeugt.

3. Die Küchenmaschine (200) nach Anspruch 2, wobei das Steuerverfahren zur Erhöhung der Drehzahl darin besteht, dass der Hall-Vorlaufwinkel auf ein Maximum von 50° erhöht wird.

4. Die Küchenmaschine (200) nach einem der Ansprüche 1 bis 3, wobei der Antriebsmotor (100) ein bürstenloser Gleichstrommotor ist.

## Revendications

1. Machine de transformation alimentaire (200) comprenant un récipient pour aliment (210), un moteur d'entraînement (100) et un élément de transformation alimentaire pour la transformation d'aliment, une cavité contenant un aliment pour contenir l'aliment étant formée dans le récipient pour aliment (210), et l'élément de transformation alimentaire s'étendant dans la cavité contenant un aliment et tournant par rapport au récipient pour aliment (210) sous l'entraînement par le moteur d'entraînement (100), la machine de transformation alimentaire (200) comprenant en outre
un processeur (270), et
une mémoire (260) ayant, stocké à l'intérieur, un programme de commande d'accroissement de vitesse de rotation de la machine de transformation alimentaire qui, lorsqu'exécuté par le processeur, amène le processeur à effectuer un procédé de commande d'accroissement de vitesse de rotation dans la machine de transformation alimentaire (200), le procédé de commande d'accroissement de vitesse de rotation consistant à :
lorsque la machine de transformation alimentaire (200) se trouve sous un état sans charge ou de charge légère, acquérir une instruction de vitesse de rotation ;
analyser l'instruction de vitesse de rotation pour obtenir une vitesse de rotation cible du moteur d'entraînement (100), et générer un signal de commande de modulation de largeur d'impulsion (PWM) selon la vitesse de rotation cible pour commander le moteur d'entraînement (100) ; et
durant la commande du moteur d'entraînement (100), accroître progressivement un rapport de charge du signal de commande PWM d'une manière à avancement par échelon jusqu'à ce que le rapport de charge du signal de commande PWM atteigne 1, et exécuter une commande d'affaiblissement de champ sur le moteur d'entraînement (100) pour accroître rapidement la vitesse de rotation du moteur d'entraînement (100), **caractérisée en ce que** le moteur d'entraînement (100) comprend :
un coeur en fer de stator (10), comprenant une portion annulaire de culasse de stator (11) et une pluralité de portions de dent de stator (12), une largeur de portion de culasse de stator (11) étant W, la pluralité de portions de dent de stator (12) étant agencées sur une surface circonférentielle interne de la portion de culasse de stator (11), une fente de dent de stator (101) étant formée entre deux portions de dent de stator (12) adjacentes, et la pluralité de portions de dent de stator (12) définissant un trou de stator (102) coaxial vis-à-vis de la portion de culasse de stator (11), chaque portion de dent de stator (12) comprenant un corps de portion de dent de stator (121) raccordé à la portion de culasse de stator (11) et une semelle de dent de stator (122) agencée au niveau d'une extrémité interne du corps de portion de dent de stator (12), une largeur de chaque corps de portion de dent de stator (121) étant V, et W:V = 0,6 à 0,7 ; et
un coeur en fer de rotor (20), agencé de manière à pouvoir tourner dans le trou de stator (102) et coaxial avec le trou de stator (102).

2. Machine de transformation alimentaire (200) selon la revendication 1, le procédé de commande d'accroissement de vitesse de rotation comprenant le fait qu'un champ magnétique du rotor du moteur d'entraînement (100) est affaibli en accroissant un angle de progression de Hall pour amener un enroulement de stator du moteur d'entraînement (100) à générer un champ magnétique dans un sens opposé durant la commande d'affaiblissement de champ sur le moteur d'entraînement (100).

3. Machine de transformation alimentaire (200) selon la revendication 2, le procédé de commande d'accroissement de vitesse de rotation comprenant le fait que l'angle de progression de Hall est accru jusqu'à un maximum de 50°.

4. Machine de transformation alimentaire (200) selon l'une des revendications 1 à 3, le moteur d'entraînement (100) étant un moteur DC sans balais.
